# EUROPEAN PATENT APPLICATION

(11) **EP 4 775 608 A1**
(43) Date of publication of application: **15.07.2026**
(21) Application number: 25150744.8
(22) Date of filing: 08.01.2025
(51) Int. Cl.: C08G 18/00, C08G 18/20, C08G 18/24, C08G 18/28, C08G 18/32, C08G 18/38, C08G 18/50, C08G 18/64, C08G 18/66, C08G 18/69, C08G 18/72, C08G 18/76, C08G 18/79, C09D 175/04, C08G 18/10

(54) **POLYURETHANE COATING FOR USE FOR METAL AND CONCRETE APPLICATION**

(71) Applicant: Sika Technology AG, 6340 Baar (CH)
(72) Inventor: BRUCHERTSEIFER, Christian, 70439 Stuttgart (DE); WALTHER, Burkhard, 83308 Trostberg (DE); SEEGER, Dirk, 26123 Oldenburg (DE)
(74) Representative: Sika Patent Attorneys

(57) **Abstract**

The invention relates to a two- or three-component composition comprising, in a spatially separated arrangement, a first component comprising a polyolefin having a polymer backbone consisting of repeating units derived from an olefinically unsaturated monomer having 4 carbon atoms and; and a second component comprising a preparation comprising at least one aromatic polyisocyanate having 2 or more isocyanate groups and/or a reaction product having isocyanate groups obtained by reacting said polyisocyanate having 2 or more isocyanate groups and a polyolefin having a polymer backbone consisting of repeating units derived from an olefinically unsaturated monomer having 4 carbon atoms; and optionally a third component, wherein the two or three-component composition further comprises at least one linear aliphatic polyisocyanate having 2 or more isocyanate groups and/or at least one cyclic aliphatic polyisocyanate having 2 or more isocyanate groups (b4) as constituent of the second component and/or third component, wherein the content of linear aliphatic polyisocyanate and/or cyclic aliphatic polyisocyanate is 10 wt.-% or less of the second component. The invention further relates to a coating preparation obtainable by mixing such composition, a cured composition obtainable by curing such coating preparation, a method of preparing a coating layer from such composition, a coated substrate obtainable by said method and the use of said coating preparation.

## Description

The invention relates to a two- or three-component composition for the preparation of a polyurethane coating, a coating preparation obtainable by mixing such composition, a cured composition obtainable by curing such coating preparation, a method of preparing a coating layer from such composition, a coated substrate obtainable by said method and the use of said coating preparation.

### Prior art

Polyurethanes are extensively employed across a broad spectrum of industrial and consumer applications due to their exceptional versatility, mechanical strength, and resistance to various environmental factors. However, despite these favourable properties, polyurethanes are not without significant limitations that affect their performance, particularly in demanding or specialized contexts.

One of the primary concerns with polyurethanes is their inadequate tear resistance, which limits their durability when subjected to mechanical stress. Additionally, polyurethanes often exhibit poor flexibility at low temperatures, resulting in brittleness and potential failure in cold environments. These mechanical shortcomings can severely restrict the range of applications for polyurethane materials, especially in regions or industries where extreme temperatures and mechanical wear are prevalent.

In order to ensure long-term integrity and durability of structures of material such as metal or concrete, for instance in metal structures such as construction units that have to bear heavy loads, it is necessary to protect the surfaces of these structures against weathering and/or corrosion. The heavier the loads to be borne by such structures and the heavier the weathering conditions and the more corrosive the environment of the structures, the more important is efficient protection against the impact of weathering and/or corrosion. For instance, in offshore wind farms any metal structure is exposed to a highly corrosive environment such as saline sea air or saline sea water or both. At the same time, the metal structures of the pillars of wind turbines located in offshore wind farms have to bear significant loads as a result of wind pressure. Therefore, the metal structures in pillars of wind turbines in offshore wind farms provide an excellent example of the need for efficient corrosion protection.

Protection against the impact of weathering and/or corrosion can be provided by the application of a protective coating to the surface of a structure to be protected in order to prevent exposure of said surface to the adverse environment. Polyurethane coatings have been commonly employed for this purpose, as polyurethanes can be prepared in a manner that they comply with requirements such as
(i) being hydrophobic in order to prevent water from migrating into the polymer coating such that contact of the coated surface with water (being a chemical compound often essential for corrosion to occur) is prevented,
(ii) being capable of adhering to the surfaces of the material to be protected in order to avoid undesired premature separation from the surface,
(iii) having mechanical properties such as a sufficiently high impact strength over a broad range of temperature such as from -70 ° C to +150 ° C in order to be suitable for being used in an environment such as polar regions and, in particular in the case of metal structures, in order to endure temperatures occurring when processing such as soldering or welding is carried out in the vicinity of the coating,
(iv) being chemically stable in the environment of the surface to be protected which
commonly implies properties such as oxidation resistance and weathering resistance.

Whereas it is difficult to fully meet each of these requirements at the same time, in the prior art polyurethane coatings have been described where the incorporation of diols on the basis of elastomeric polymers such as polybutadiene or polyisoprene. E.g. WO 2020/22929 A1 describes polyurethanes on the basis of such diols, which are prepared from two component compositions with polyisocyanates, wherein one of the components comprises the diol component or a predominant part thereof, while the other component either comprises the polyisocyanate or polyisocyanate prepolymers derived from the diols and the polyisocyanates.

On the basis of WO 2020/229229 A1 commercial formulations had been developed, which comprise a mixture of an aromatic poylisocyanate and an aliphatic polyisocynate in a weight ratio of about 2:1, which provide satisfactory adhesion of the coating to steel or concrete substrates. However, for these formulation it has been observed that they have compounding issues in that on longer standing the compounds start to segregate, which results in relevant changes in their physical and chemical properties. This instability can affect the processing characteristics, performance, and shelf-life of polyurethane products, thereby posing challenges for manufacturers and end-users alike.

In addition, whereas the compositions developed on the basis of WO 2020/229229 A1 provide progress in terms of tear resistance and mechanical strength over respective coating compositions of the prior art, there is further need for improvement of these characteristics for highly demanding applications.

Hence, it was the aim of the invention to provide polyurethane coatings with improved tear resistance by developing formulations with enhanced mechanical strength, which can withstand greater stress without failure. Additionally, the invention aims at improving the low-temperature flexibility of polyurethanes, while ensuring that the material remains pliable and resistant to brittleness in cold environments.

Another critical aim was to address the issue of declining long-term adhesion of polyurethanes to substrates such as metals and concrete. By enhancing the adhesion properties, the goal was to maintain a strong and durable bond over time, thus preserving the integrity of structures and coatings. Finally, optimizing the storage stability of polyurethane compositions was targeted to prevent degradation during storage, thereby extending their shelf-life and ensuring consistent performance when utilized.

### Summary of the invention

In the investigations, which are underlying the present invention, it has unexpectedly been found that the formulation of an isocyanate component of a two component coating composition, which contains a mixture of cyclic aliphatic polyisocyanates, linear aliphatic polyisocyanates, and aromatic polyisocyanates provides for a significant improvement of the segregation stability of the component, and thereby allows for improved utility of respective two components coatings. This innovative formulation also provided coatings with improved tear resistance, allowing them to endure greater mechanical stress without failure. Additionally, the enhanced low-temperature flexibility of the material ensures that it remains pliable and resistant to brittleness in cold environments.

The inclusion of these specific polyisocyanates also led to marked improvements in the long-term adhesion properties of polyurethanes to metals and concrete, ensuring a durable and reliable bond over time. Furthermore, the optimized formulation improved the storage stability of the polyurethane compositions.

Accordingly, in a first aspect the present invention is directed to a two- or three-component composition comprising, in a spatially separated arrangement,
(C1) a first component comprising
   (a) a polyolefin having a polymer backbone consisting of (a-i) repeating units derived from an olefinically unsaturated monomer having 4 carbon atoms and, optionally, (a-ii) a hydrocarbon group L having 5-20 carbon atoms in a non-terminal position of said polymer backbone, wherein said polymer backbone has functional groups selected from hydroxyl groups and amine groups at its chain ends; and
(C2) a second component comprising a preparation comprising
   (b1) at least one aromatic polyisocyanate having 2 or more isocyanate groups and/or
   (b2) a reaction product having isocyanate groups obtained by reacting said polyisocyanate having 2 or more isocyanate groups (b1) and (b2a) a polyolefin having a polymer backbone consisting of (b2a-i) repeating units derived from an olefinically unsaturated monomer having 4 carbon atoms and, optionally, (b2a-ii) a hydrocarbon group having 5-20 carbon atoms in a non-terminal position of said polymer backbone, wherein said polymer chain has functional groups selected from hydroxyl groups and amine groups at its chain ends; and optionally
(C3) a third component,
   wherein the two or three-component composition further comprises at least one linear aliphatic polyisocyanate having 2 or more isocyanate groups (b3) and/or at least one cyclic aliphatic polyisocyanate having 2 or more isocyanate groups (b4) as constituent of the second component (C2) and/or third component (C3) in a content of 10 wt.-% or less of the second component (C2).

Surprisingly, it has been found that such a two- or three-component compositions provide a composition with a good storage stability to prevent degradation during storage, thereby extending the shelf-life of the composition and ensuring consistent performance when utilized.

Further advantages of the present invention are that coated substrates can be obtained, where the coatings have high tear resistance and high low-temperature flexibility, while the coating remains pliable and resistant to brittleness in cold environments, and that coated substrates can be obtained, wherein the coatings exhibit sufficient adherence to substrates, to which they have been applied (such as metals and concrete) over a long period of time.

Further embodiments of the invention are described in other independent claims. Preferred embodiments of the invention are described in the dependent claims.

### Detailed description of the invention

Accordingly, the present invention is directed to a two- or three-component composition comprising, in a spatially separated arrangement,
(C1) a first component comprising
   (a) a polyolefin having a polymer backbone consisting of (a-i) repeating units derived from an olefinically unsaturated monomer having 4 carbon atoms and, optionally, (a-ii) a hydrocarbon group L having 5-20 carbon atoms in a non-terminal position of said polymer backbone, wherein said polymer backbone has functional groups selected from hydroxyl groups and amine groups at its chain ends; and
(C2) a second component comprising a preparation comprising
   (b1) at least one aromatic polyisocyanate having 2 or more isocyanate groups and/or
   (b2) a reaction product having isocyanate groups obtained by reacting said polyisocyanate having 2 or more isocyanate groups (b1) and (b2a) a polyolefin having a polymer backbone consisting of (b2a-i) repeating units derived from an olefinically unsaturated monomer having 4 carbon atoms and, optionally, (b2a-ii) a hydrocarbon group having 5-20 carbon atoms in a non-terminal position of said polymer backbone, wherein said polymer chain has functional groups selected from hydroxyl groups and amine groups at its chain ends; and optionally
(C3) a third component,
   wherein the two or three-component composition further comprises at least one linear aliphatic polyisocyanate having 2 or more isocyanate groups (b3) and/or at least one cyclic aliphatic polyisocyanate having 2 or more isocyanate groups (b4) as constituent of the second component (C2) and/or third component (C3) in a content of 10 wt.-% or less of the second component (C2).

Polyisocyanates are well known to the person skilled in the art as chemical compounds which contain two or more isocyanate moieties (-N=C=O). Such moieties are reactive towards alcohol groups (with which they react to form urethane linkages) or amines (with which they form urea linkages).

Aromatic polyisocyanates refer to polyisocyanates, wherein the isocyanate moieties are attached to an non-aromatic aromatic hydrocarbon structure.

Linear aliphatic polyisocyanates refer to polyisocyanates, wherein the isocyanate moieties are attached to a hydrocarbon structure, which may have a straight or branched hydrocarbon chain.

Cyclic aliphatic polyisocyanates refer to polyisocyanates, wherein the isocyanate moieties are attached to a hydrocarbon structure, which comprises a non-aromatic cycle.

Polyolefins are known to the person skilled in the art as polymers obtained from the polymerisation of olefinically unsaturated monomers. In the invention the polyolefin is based on monomers having 4 carbon atoms. To enable the incorporation of such polyolefins into polyurethanes, the polyolefins are functionalized and comprise chemical moieties, which are reactive towards isocyanate groups, at its chain ends. In the invention, the moieties are selected from hydroxyl groups and amino groups.

As noted above, in one embodiment, the polyolefin comprises (a-ii) a hydrocarbon group having 5-20 carbon atoms in a non-terminal position of said polymer backbone. In such case, the polyolefine is usually formed from a mixture of the olefinically unsaturated monomer having 4 carbon atoms and one or more further monomers, which provide the hydrocarbon group having 5-20 carbon atoms.

A polymer backbone is known to the person skilled in the art as the continuous chain of a repeated sequence of monomer units that form the main structural framework of a polymer molecule to which side groups, branches, or functional groups may be attached.

In a preferred embodiment, the inventive two- or three-component composition is a two-component composition comprising, in a spatially separated arrangement, (C1) a first component comprising
(a) a polyolefin having a polymer backbone consisting of (a-i) repeating units derived from an olefinically unsaturated monomer having 4 carbon atoms and, (a-ii) a hydrocarbon group L having 5-20 carbon atoms in a non-terminal position of said polymer backbone, wherein said polymer backbone has functional groups selected from hydroxyl groups and amine groups at its chain ends; and (C2) a second component comprising a preparation comprising
(b1) at least one aromatic polyisocyanate having 2 or more isocyanate groups and/or
(b2) a reaction product having isocyanate groups obtained by reacting said polyisocyanate having 2 or more isocyanate groups (b1) and (b2a) a polyolefin having a polymer backbone consisting of (b2a-i) repeating units derived from an olefinically unsaturated monomer having 4 carbon atoms and (b2a-ii) a hydrocarbon group having 5-20 carbon atoms in a non-terminal position of said polymer backbone, wherein said polymer chain has functional groups selected from hydroxyl groups and amine groups at its chain ends;
wherein the two-component composition further comprises at least one linear aliphatic polyisocyanate having 2 or more isocyanate groups (b3) and/or at least one cyclic aliphatic polyisocyanate having 2 or more isocyanate groups (b4) as constituent of the second component (C2) in a content of 10 wt.-% or less of the second component (C2).

Alternatively, the inventive two- or three-component composition is a three-component composition comprising, in a spatially separated arrangement,
(C1) a first component comprising
(a) a polyolefin having a polymer backbone consisting of (a-i) repeating units derived from an olefinically unsaturated monomer having 4 carbon atoms and, (a-ii) a hydrocarbon group L having 5-20 carbon atoms in a non-terminal position of said polymer backbone, wherein said polymer backbone has functional groups selected from hydroxyl groups and amine groups at its chain ends; and (C2) a second component comprising a preparation comprising
(b1) at least one aromatic polyisocyanate having 2 or more isocyanate groups and/or
(b2) a reaction product having isocyanate groups obtained by reacting said polyisocyanate having 2 or more isocyanate groups (b1) and (b2a) a polyolefin having a polymer backbone consisting of (b2a-i) repeating units derived from an olefinically unsaturated monomer having 4 carbon atoms and, (b2a-ii) a hydrocarbon group having 5-20 carbon atoms in a non-terminal position of said polymer backbone, wherein said polymer chain has functional groups selected from hydroxyl groups and amine groups at its chain ends; and (C3) a third component,
wherein the three-component composition further comprises at least one linear aliphatic polyisocyanate having 2 or more isocyanate groups (b3) or at least one cyclic aliphatic polyisocyanate having 2 or more isocyanate groups (b4) as constituent of the third component (C3) and at least one linear aliphatic polyisocyanate having 2 or more isocyanate groups (b3) or at least one cyclic aliphatic polyisocyanate having 2 or more isocyanate groups (b4) as constituent of the second component (C2), wherein if the constituent of the third component (C3) is (b3), the constituent of the second component (C2) is (b4) or wherein if the constituent of the third component (C3) is (b4), the constituent of the second component (C2) is (b3). Also in this embodiment, the combined content of the linear aliphatic polyisocyanate and cyclic aliphatic polyisocyanate is 10 wt.-% or less of the second component (C2).

In a yet further alternative, the two- or three-component composition is a three-component composition comprising, in a spatially separated arrangement,
(C1) a first component comprising
(a) a polyolefin having a polymer backbone consisting of (a-i) repeating units derived from an olefinically unsaturated monomer having 4 carbon atoms and, (a-ii) a hydrocarbon group L having 5-20 carbon atoms in a non-terminal position of said polymer backbone, wherein said polymer backbone has functional groups selected from hydroxyl groups and amine groups at its chain ends; and (C2) a second component comprising a preparation comprising
(b1) at least one aromatic polyisocyanate having 2 or more isocyanate groups and/or
(b2) a reaction product having isocyanate groups obtained by reacting said polyisocyanate having 2 or more isocyanate groups (b1) and (b2a) a polyolefin having a polymer backbone consisting of (b2a-i) repeating units derived from an olefinically unsaturated monomer having 4 carbon atoms and, (b2a-ii) a hydrocarbon group having 5-20 carbon atoms in a non-terminal position of said polymer backbone, wherein said polymer chain has functional groups selected from hydroxyl groups and amine groups at its chain ends; and (C3) a third component,
wherein the three-component composition further comprises at least one linear aliphatic polyisocyanate having 2 or more isocyanate groups (b3) and at least one cyclic aliphatic polyisocyanate having 2 or more isocyanate groups (b4) as constituent of the third component (C3). In this embodiment, as in the above, the combined content of the linear aliphatic polyisocyanate and cyclic aliphatic polyisocyanate is 10 wt.-% or less of the second component (C2).

The olefinically unsaturated monomer having 4 carbon atoms, which constitutes the polyolefin (a), suitably has 1 olefinic double bond or 2 olefinic double bonds. If the olefinically unsaturated monomer has more than one olefinic double bond, the resulting polymer also has residual olefinic double bonds, but also encompasses polymers, wherein the resulting oelfinic double bonds are partially or completely removed by hydrogenation. Preferred respective unsaturated monomers can particularly be selected from the group consisting of butadiene, n-butene, 2-butene, isobutene and mixtures thereof. Likewise, the olefinically unsaturated monomer having 4 carbon atoms, which constitutes the polyolefin (b2a), preferably has 1 olefinic double bond or 2 olefinic double bonds and is particularly preferably selected from the group consisting of butadiene, n-butene, 2-butene, isobutene and mixtures thereof.

In a preferred embodiment, the functional groups in at least one of the polyolefin (a) and the polyolefin (b2a) are hydroxyl groups. More preferably, the functional groups of both the polyolefin (a) and polyolefin (b2a) are hydroxyl groups.

The polyolefin (a) and (b2a) can be the same or different, but preferably, the polyolefin (a) and polyolefin (b2a) are identical.

The aromatic polyisocyanate, which is used in the component C-2 of the inventive composition, is not subject to any relevant limitations, and can be any aromatic polyisocyanate, which is available to the skilled practitioner. Particularly suitable aromatic polyisocyanate for use as the at least one aromatic polyisocyanate having 2 or more isocyanate groups (b1) are those in the group consisting of toluene 2,4-diisocyanate, toluene 2,6-diisocyanate, diphenylmethane 4,4' - diisocyanate, diphenylmethane 2,4'-diisocyanate, diphenylmethane 2,2'-diisocyanate, polymeric MDI, phenylene 1,3-diisocyanate, phenylene 1,4-diisocyanate, 2,3,5,6-tetramethyl-1,4-diisocyanatobenzene, naphthalene 1,5-diisocyanate, 3,3' -dimethyl-4,4' -diisocyanatodiphenyl, dianisidine diisocyanate and mixtures thereof. More preferably, the least one aromatic polyisocyanate having 2 or more isocyanate groups is selected from the group of toluene 2,4-diisocyanate, toluene 2,6-diisocyanate, diphenylmethane 4,4' -diisocyanate, diphenylmethane 2,4'-diisocyanate, diphenylmethane 2,2'-diisocyanate, polymeric MDI, phenylene 1,3-diisocyanate and phenylene 1,4-diisocyanate (as well as mixtures thereof) as such polyisocyanates are readily available in larger quantities. Particularly preferably, the aromatic polyisocyanate is selected from the group consisting of diphenylmethane 4,4'-diisocyanate, diphenylmethane 2,4'-diisocyanate, diphenylmethane 2,2'-diisocyanate (isomers of MDI), polymeric MDI, and mixtures thereof.

The at least one linear aliphatic polyisocyanate having 2 or more isocyanate groups (b3) can similarly be any linear aliphatic polyisocyanate, which is available to the skilled practitioner. In this context, the indicated "linear" is intended to be recognized mainly as a distinction of polyisocyanates on the basis cyclic aliphatic compounds, i.e. the term "linear" includes branched aliphatic moiteties. Particularly suitable linear aliphatic polyisocyanate for use as the linear aliphatic polyisocyanate having 2 or more isocyanate groups (b3) are selected from the group consisting of tetramethylene 1,4-diisocyanate, 2-methylpentamethylene 1,5-diisocyanate, hexamethylene 1,6-diisocyanate, 2,2,4-trimethylhexamethylene 1,6- diisocyanate, 2,4,4-trimethylhexamethylene 1,6-diisocyanate, decamethylene 1,10-diisocyanate, dodecamethylene 1,12-diisocyanate, or mixtures thereof. Particularly preferred, are tetramethylene 1,4-diisocyanate, and hexamethylene 1,6-diisocyanate, and mixtures thereof, and especially preferred is hexamethylene 1,6-diisocyanate (HMDI).

The at least one cyclic aliphatic polyisocyanate having 2 or more isocyanate groups (b4) can also be any cyclic aliphatic polyisocyanate, where the cyclic aliphatic moiety has at least one aliphatic ring, and where the respective isocyanate residues are attached to the aliphatic moiety. In this respect, it is not necessary, that the isocyanate residues are attached to the ring, but it is also possible that the isocyanates can be attached to an aliphatic carbon atom, which is attached to the ring via a bond or aliphatic chain. Preferably, the cyclic aliphatic polyisocyanate having 2 or more isocyanate groups (b4) is selected from the group consisting of cyclohexane 1,3-diisocyanate, cyclohexane 1,4-diisocyanate, 1-methyl-2,4-diisocyanatocyclohexane, 1-methyl-2,6-diisocyanatocyclohexane, 1-isocyanato-3,3,5-trimethyl-5-isocyanatomethylcyclohexane , perhydro(diphenylmethane) 2,4' -diisocyanate, perhydro(diphenylmethane) (isomer of H12MDI), 4,4' -diisocyanate, 1,4-diisocyanato-2,2,6-trimethylcyclohexane (isomer of H12MDI), 1,3-bis(isocyanatomethyl)cyclohexane, 1,4-bis(isocyanatomethyl)cyclohexane or mixtures thereof. Particularly preferably, the cyclic aliphatic polyisocyanate having 2 or more isocyanate groups (b4) is selected from the group consisting of cyclohexane 1,3-diisocyanate, cyclohexane 1,4-diisocyanate, 1-methyl-2,4-diisocyanatocyclohexane, 1-methyl-2,6-diisocyanatocyclohexane, 1-isocyanato-3,3,5-trimethyl-5-isocyanatomethylcyclohexane (IPDI) and mixtures thereof and even more preferably the cyclic aliphatic polyisocyanate having 2 or more isocyanate groups (b4) is selected from 1-methyl-2,4-diisocyanatocyclohexane, 1-methyl-2,6-diisocyanatocyclohexane, 1-isocyanato-3,3,5-trimethyl-5-isocyanatomethylcyclohexane and mixtures thereof.

In an especially preferred embodiment, the at least one aromatic polyisocyanate having 2 or more isocyanate groups (b1) in the inventive composition is selected from the group consisting of diphenylmethane 4,4' -diisocyanate, diphenylmethane 2,4' -diisocyanate, diphenylmethane 2,2' -diisocyanate, polymeric MDI and mixtures thereof,
the at least one linear aliphatic polyisocyanate having 2 or more isocyanate groups (b3) is hexamethylene 1,6-diisocyanate, and
the at least one cyclic aliphatic polyisocyanate having 2 or more isocyanate groups (b4) is 1-isocyanato-3,3,5-trimethyl-5-isocyanatomethylcyclohexane.

The respective aromatic, and the linear aliphatic and/or cyclic aliphatic polyisocyanates can be used in either monomeric form, in trimeric form (where three diisocyanates from a cyanuric acid ring) or in higher oligomeric form, e.g. as polymeric MDI.

Polymeric MDI is a polymeric reaction product known to a person skilled in the art obtainable by condensing formaldehyde with aniline and reacting the crude reaction product with phosgene.

Whereas in the invention, the two- or three-component composition may comprise only a linear aliphatic polyisocyanate or a cyclic aliphatic polyisocyanate, an embodiment, where the two- or three- component composition comprises at least a linear aliphatic polyisocyanate is preferred.

As noted above, the content of the linear aliphatic and/or cyclic aliphatic polyisocyanate of the weight of the second component (C2) is at most 10 wt.-% which ensures sufficient long term stability of the composition against segregation. To this end, it is even preferred that the contents of the linear aliphatic and/or cyclic aliphatic polyisocyanate is at most 7 wt.-%, more preferably at most 6 wt.-% and even more preferably at most 5 wt.-%. On the other hand, to provide the desired curing characteristics, the content of the linear aliphatic and/or cyclic aliphatic polyisocyanate should not be too small, so that a minimum content of the linear aliphatic and/or cyclic aliphatic polyisocyanate of 1wt.-% is preferred and a minimum content of 2 wt.-%is more preferred.

Whereas in principle, it is possible that the respective aromatic, linear aliphatic and cyclic aliphatic polyisocyanates in the inventive two- or three-component composition can be present in any ratio (provided that the combined content of the linear aliphatic polyisocyanate and cyclic aliphatic polyisocyanate does not exceed 10 wt.-% of the second component (C2)), it is preferred that the aromatic polyisocyanates are used in an excess over the combined amount of linear aliphatic and cyclic aliphatic polyisocyanates. E.g. the ratio of aromatic to linear aliphatic and cyclic aliphatic polyisocyanates is preferably at least 1.2:1, more preferably in the range of 2:1 to 20:1 and even more preferably in the range of 5:1 to 15:1. In case of lower ratios of the aromatic polyisocyanate to the respective linear aliphatic polyisocyanate and cyclic aliphatic polyisocyanate, the skilled practitioner will appreciate that this may require that the second component is constituted to a larger content with a polyolefin (b2a). This polyolefin can be comprised in the second component e.g. in the form of a prepolymer, where the OH-groups of the polyolefin have reacted with polyisocyanates to provide a prepolymer with terminal isocyanate groups.

For the respective linear aliphatic and cyclic aliphatic polyisocyanates, it is preferred that their ratio varies in the range from 3:1 to 1:3 and preferably from 2:1 to 1:2. The respective ratios herein are intended to denote weight ratios except in case where another basis is explicitly indicated.

Next to the polyolefin (a) it is possible that the first component (C1) of the inventive composition comprises further diol or polyol constituents such as phenol modified liquid hydrocarbon resins, including resins based on phenol and hydrocarbons having 9 and/or 10 carbon atoms (examples of which are available e.g. as NOVARES LA 300, 500, 700, 1000 from Rütgers VFT AG, Duisburg, Germany) or phenol modified liquid aromatic hydrocarbon resin, e.g. based on phenol and styrene like NOVARES LS-500 (Rütgers VFT). In addition, it is possible that the composition may comprise small molecule polyols (with a molecular weight of less than 50 g/mol), such as e.g. triethanolamine, 2-ethylhenadiol or the like.

For certain embodiments of the inventive two- or three-component composition, especially if the polyolefin (a) and (b2a) (which as noted above is optional in the second component) is a polyolefin having hydroxyl groups at its chain ends, it is expedient if the composition further comprises a diamine, which is preferably also provided in the first component (C1). By means of the incorporation of respective diamines, on mixing the first component (C1) with the second component (C2), the reaction with the polyisocyanates not only forms urethane groups, but also urea groups, so that the resulting polymer is a polyurethane-polyurea hybrid polymer.

Where the ratio of the hydroxyl groups and amino groups from the combined the first component (C1) and second component (C2) is not subject to any relevant limitation, it is usually preferred that the ratio is adjusted in the range of 5:1 to 1:5, more preferably 3:1 to 1:3 and even more preferably 2.5: 1 to 1:2.5. In one embodiment the amines are used in a molar excess over the hydroxyl groups with an amino group to hydroxyl group ratio of about 1:1 to 3:1 and preferably 1.2:1 to 2.5:1.

The diamine, which can be used in the inventive composition can a diamine, which is based on an aliphatic or aromatic small molecule (i.e. with a molecular mass of 500 g/mol or less) or can be a diamine which is based on an polymeric backbone. A preferred aromatic diamine chain extender is e.g. diethyl toluene diamine or bis(4-amino-2-chloro-3,5-diethylphenyl)methane.

Preferred polymeric diamine chain extenders for use in the composition of the present invention are in particular diamines on the basis of a C2- to C6-polyalkylene oxides such as polyethylene oxide, polypropylene oxide and polytetrahydrofurane. The amine function in such diamines can be provided as directly pendent to the polytetrahydrofurane backbone, but preferably will be provided by attachment via a linker, such as in particular by esterification of the OH functional polytetrahydrofurane precursor with aminobenzoic acid. Particularly preferred polymeric diamine chain extenders for use in the composition of the invention are based on polytetrahydrofurane, preferably with a molecular weight in the range from about 800 to 5000 g/mol more preferably in the range of about 900 to 2500 g/mol. Corresponding chain extenders are e.g. commercially available under the tradename Versalink P 1000 from Evonik.

Whereas the amine in the respective small molecule or polymeric diamines can be primary or secondary amines, the use of primary amines is preferred. Moreover, the polymeric diamines can have the respective amino groups in the main chain or at the ends thereof, where a position at the end of the respective polymer backbone is preferred.

To increase the curing speed of the inventive two- or three-component composition and to improve the characteristics of the composition during an application by spraying, a curing catalyst or accelerator, which facilitates the reaction of isocyanate groups and hydroxyl and/or amino groups can suitably be incorporated into the composition, where, in terms ensuring longer shelf life, it is preferred that catalyst is included as part of the first component (C1). As this component regularly does not contain isocyanate groups, this ensures that unwanted reactions of the isocyanates, which may be catalysed by the curing catalyst or accelerator, are prevented.

Suitable curing catalysts or accelerators include especially tertiary amines and metal based catalyst, such as bismuth and tin salts.

The tertiary amine for use as a curing accelerator in the inventive composition is not subject to any relevant limitations, any every suitable tertiary amine, which is known to the skilled practitioner, can be used. A tertiary amine is known to the person skilled in the art as an amine, wherein the nitrogen has three organic substituents, which are not hydrogen. Suitable tertiary amines include e.g. triethylamine or dialkyl alkoxylated amines.

Particularly preferred tertiary amines for use as a curing accelerator in the inventive composition are cyclic tertiary amines. The respective cyclic tertiary amine may be aliphatic or aromatic, but preferably is aliphatic. A particularly preferred cyclic tertiary amine is 1,4-Diazabicyclo(2.2.2)octan (DABCO).

Suitably metal based catalysts for reaction of isocyanates with amines and hydroxyl groups are commonly known as catalysts, and are mostly based on metals such lithium, sodium, potassium, rubidium, caesium, francium, beryllium, magnesium, calcium, strontium, barium, radium, aluminium, gallium, indium, thallium, tin and/or lead.

Preferably, the at least one metal based catalyst comprises a main group metal and particular preferably a carbon group metal. Carbon group metal based catalysts are commonly known as catalysts, which are based on tin and/or lead.

More preferably, the at least one metal based catalyst is a tin based catalyst such as in particular dioctyltin dilaurate. In this regard, it has been observed that the use of tin catalysts has a favourable impact on the tear resistance of the coating.

It is furthermore preferred that the first component (C1) of the inventive composition comprises at least one cyclic aliphatic tertiary amine and/or at least one tin based catalyst, in particular at least one cyclic aliphatic tertiary amine and at least one tin based catalyst. The respective cyclic aliphatic tertiary amine and/or at least one tin based catalyst can be used in any appropriate ratio, but preferably are provided in a ratio from about 3:1 to about 1:2, more preferably from about 2.5:1 to about 1:1 and even more preferably from about 2:1 to about 1.2:1.

In a preferred embodiment the inventive two or three component composition further comprises an adhesion promoter, for which the use of silanes has been proven to be particular suitable. Accordingly, preferred inventive two or three component compositions comprise at least one silane adhesion promoter as a constituent of either of the first, second or third component, where an incorporation of the adhesion promoter into the first component is particularly preferred.

Preferably, the at least one silane adhesion promoter is a silylether (i.e. a compound with at least one Si-OR functional moiety).

More preferably, the at least one silane adhesion promoter, preferably at least one silylether, is reactive towards at least one of alcohol-, amino- or isocyanate-groups.

The reactivity of the at least one silane, preferably at least one silyl ether, towards at least one of alcohol-, amino- or isocyanate-groups may proceed via substitution reactions, such as nucleophilic or electrophilic substitutions, or elimination reactions, such as nucleophilic or electrophilic elimination reactions, commonly known to a person skilled in the art.

In a preferred embodiment, the first component additionally comprises at least one silylether, wherein the silylether has a functional group, which is reactive towards at least one of alcohol-, amino- or isocyanate groups. Functional groups, which are reactive towards isocyanate groups, include e.g. alcohol (OH) or amino (NH or NH₂) groups. Silyether adhesion promoters of this type include e.g. N-(Butyl)-3-aminopropyltrimethoxysilane, Bis(3-triethoxypropyl)amine, Bis(trimethoxypropyl)amine, N-(2-Aminoethyl)-3-aminopropyltrimethoxysilan or a multifunctional siloxane with aminofunctionalities, which commercially available under the tradename Dynasilan^{®} VPS SIVO 260 from Evonic. Functional groups, which are reactive towards alcohol- or amino groups, include e.g. epoxy groups. As a suitable adhesion promoters of this type e.g. gylcidyloxypropytrimethoxy-silane can be mentioned.

In another preferred embodiment, the at least one silane is a silylether in the form of an alkyltrialkoxysilane, wherein the alkyl group is preferably selected from C2 to C16 and preferably C4 to C12 alkyl groups, and the alkoxy groups are preferably C1 to C4 and more preferably C1 or C2 alkyoxy groups. Particularly preferred alkyltrialkoxysilane of this type are octyltrialkoxysilanes, preferably in the form of octyltriethoxysilane, octyltrimethoxysilane and mixtures thereof.

Other silylether adhesion promoters, which are also useful included e.g. Tris[3-(trimethoxysilyl)propyl]isocyanurate.

In one preferred embodiment, the at least one silane is not an amino silane.

To provide a desired colour appearance of a coating, which is produced from the inventive two or three component composition, a colouring agent can suitably be incorporated into the first, second or third component of the composition. As the first component comprises the compounds of the two or three component composition, which are the least reactive, the colouring agent, if present is preferably incorporated into the first component.

To adjust or optimize mechanical or processing characteristics of the inventive two- or three-component composition, it is possible that they contain furthers additives, which are suitably selected from fillers, solvents, plasticizers, stabilizers, rheology aids, desiccants such as zeolites in particular, stabilizers against oxidation, heat, light or UV radiation, flame-retardant substances, or surface-active substances such as wetting agents or defoamers.

Fillers, which can be used in the inventive composition include e.g. organic or inorganic filler, such as natural, ground or precipitated calcium carbonates, optionally coated with fatty acids, especially stearic acid, baryte (heavy spar), talcs, quartz flours, quartz sand, dolomites, wollastonites, kaolins, calcined kaolins, mica (potassium aluminum silicate), molecular sieves, aluminum oxides, aluminum hydroxides, magnesium hydroxide, silicas including finely divided silicas from pyrolysis processes, graphite, carbon black, metal powders such as aluminium, copper, iron, silver or steel, PVC powder and/or hollow spheres.

The addition of fillers is advantageous in that it affects the rheological properties and it is possible to increase the strength of the cured polyurethane composition. In one preferred embodiment the inventive two- or three component composition therefore comprises at least one filler selected from the group consisting of calcium carbonate, especially in ground form, kaolin, baryte, talc, quartz flour, dolomite, wollastonite, kaolin, calcined kaolin, mica and carbon black.

The use of carbon black especially also increases the thixotropy or creep resistance of the composition, which is preferable. A particularly suitable thixotropic agent is industrially produced carbon black.

In the inventive two- or three-component compositions, it is preferred that the first component (C1) and the second component (C2) are provided in ratios, where the respective compositions can be intimately mixed without the necessity of complex dosing and mixing equipment. Suitable dosing weight ratios of the first component (C1) to the second component (C2) to this end are in the range from 4:1 to 1:4, more preferably from 2:1 to 1:2, even more preferably from 3:2 to 2:3, and even more preferably from 55:45 to 45:55, if the at least one linear aliphatic polyisocyanate having 2 or more isocyanate groups (b3) and the at least one cyclic aliphatic polyisocyanate having 2 or more isocyanate groups (b4) are comprised in the second component (C2).

Similarly, if the inventive composition is a three component composition it is preferred that the weight ratio of the first component (C1) to the combination of the second component (C2) and the third component (C3) is from 4:1 to 1:4, preferably from 2:1 to 1:2, more preferably from 3:2 to 2:3, even more preferably from 55:45 to 45:55.

Preferably, the polyolefin (a) is the most relevant constituent of the of the first component, and is present therein in an amount of 40 to 80 wt.-%, more preferably 50 to 70 wt.-%, even more preferably 55 to 65 wt.-%, based on the total weight of the first component.

If the inventive two- or three component composition comprises at least one tertiary amine, it is preferred that the tertiary amine is present in the two- or three component composition in an amount of from 0.005 to 2.5 wt.-%, more preferably from 0.05 to 0.5 wt.-%, and even more preferably 0.07 to 0.25 wt.-%. If the tertiary amine is present in the first composition (C1) of the inventive two- or three component composition, it is preferably present in an amount of from 0.01 to 5 wt.-%, more preferably 0.1 to 1 wt.-%, even more preferably 0.15 to 0.5 wt.-%, based on the total weight of the first component.

If the inventive two- or three component composition comprises at least one main group metal based catalyst, it is preferred that the catalyst complete is present in two- or three-component composition in an amount of from 0.005 to 2.5 wt.-%, more preferably from 0.025 to 0.5 wt.-%, and even more preferably 0.05 to 0.2 wt.-%, and/or is present in the first component (C1) in an amount of from 0.01 to 5 wt.-%, more preferably 0.05 to 1 wt.-%, even more preferably 0.1 to 0.4 wt.-%, based on the total weight of the first composition.

Preferably, the at least one silane adhesion promoter is present in the first component (C1) in an amount of from 0.01 to 5 wt.-%, more preferably 0.5 to 3 wt.-%, even more preferably 1.5 to 2.5 wt.-%, based on the total weight of the first component.

Preferably, the at least one diamine is present in the first component (C1) in an amount of from 1 to 30 wt.-%, more preferably 2 to 20 wt.-%, even more preferably 5 to 15 wt.-%, based on the total weight of the first component.

Preferably, the at least one colouring agent is present in the first component (C1) in an amount of from 0.01 to 5 wt.-%, more preferably 0.5 to 3 wt.-%, even more preferably 1.5 to 2.5 wt.-%, based on the total weight of the first component.

In a particularly preferred embodiment, the first component (C1) of the inventive two- or three-component composition comprises a polyolefin (a) in an amount of from 55 to 65 wt.-%, based on the total weight of the first component, and/or the at least one tertiary amine in an amount of from 0.15 to 0.5 wt.-%, based on the total weight of the first component, and/or
the at least one main group metal based catalyst in an amount of from 0.1 to 0.4 wt.-% based on the total weight of the first component, and/or
the at least one silane adhesion promoter in an amount of from 1.5 to 2.5 wt.-% based on the total weight of the first component, and/or
the at least one diamine in an amount of from 5 to 15 wt.-% based on the total weight of the first component, and/or
the at least one colouring agent in an amount of from 1.5 to 2.5 wt.-% based on the total weight of the first component.

In an even more preferred embodiment, the polyolefin (a) of the first component is present in the first component catalyst in an amount of from 55 to 65 wt.-%, based on the total weight of the first component,
the at least one tertiary amine is present in an amount of from 0.15 to 0.5 wt.-%, based on the total weight of the first component,
the at least one main group metal based catalyst is present in an amount of from 0.1 to 0.4 wt.-% based on the total weight of the first component,
the at least one silane adhesion promoter is present in an amount of from 1.5 to 2.5 wt.-% based on the total weight of the first component,
the at least one diamine is present in an amount of from 5 to 15 wt.-% based on the total weight of the first component, and
the at least one colouring agent is present in an amount of from 1.5 to 2.5 wt.-% based on the total weight of the first component.

Preferably, the polyolefin (b2a), which has hydroxyl groups and/or amine groups at its chain ends, is present in the second component (C2) in an amount of from 20 to 70 wt.-%, more preferably 30 to 60 wt.-%, and even more preferably 40 to 50 wt.-%, based on the total weight of the second component.

It is also preferred that the aromatic polyisocyanate is the major constituent of the second component (C2) (i.e. its content by weight is higher than that of any other constituent of the second component). Suitably, thus, the at least one aromatic polyisocyanate (b1) accounts for 30 to 70 wt.-%, more preferably 40 to 60 wt.-%, even more preferably 45 to 55 wt.-%, of the the total weight of the second component.

As noted above, the content of the linear aliphatic polyisocyanate (b3) and the cyclic aliphatic polyisocyanate (b4) is preferably less than that of the aromatic polyisocyanate (b1). In a preferred embodiment, the amount of the at least one linear aliphatic polyisocyanate (b3) is from 0.01 to 5 wt.-%, more preferably 0.5 to 3 wt.-%, even more preferably 1.5 to 2.5 wt.-%, based on the total weight of the second component (if the inventive composition is a two component composition) or based on the combined weight of the second and third component (if the inventive composition is a three component composition).

In addition, or in alternative thereto, it is preferred that the amount of the at least one cyclic aliphatic polyisocyanate (b4) is from 0.01 to 5 wt.-%, more preferably 0.5 to 3 wt.-%, even more preferably 1.5 to 2.5 wt.-%, based on the total weight of the second component (if the inventive composition is a two component composition) or based on the combined weight of the second and third component (if the inventive composition is a three component composition).

In a particularly preferred embodiment, the second component (C2) comprises a polyolefin (b2a) in an amount of from 40 to 50 wt.-% based on the total weight of the second component, and/or
at least one aromatic polyisocyanate (b1) in an amount of from 45 to 55 wt.-% based on the total weight of the second component,
   and/or
the at least one linear aliphatic polyisocyanate (b3) in an amount of from 1.5 to 2.5 wt.-% based on the total weight of the second component, if the at least one linear aliphatic polyisocyanate is present in the second component (or the respective combined weight of the second and third component), and/or the at least one cyclic aliphatic polyisocyanate (b4) in an amount of from 1.5 to 2.5 wt.-% based on the total weight of the second component, if the at least one cyclic aliphatic polyisocyanate is present in the second composition (or the respective combined weight of the second and third component).

In respective composition the weight ratio of the at least one aromatic polyisocyanate (b1) to the at least one linear aliphatic polyisocyanate (b3) and/or the at least one cyclic aliphatic polyisocyanate (b4) is preferably from 20:1 to 30:1, and/or
the weight ratio of the at least one aromatic polyisocyanate (b1) to the combination of the at least one linear aliphatic polyisocyanate (b3) and the at least one cyclic aliphatic polyisocyanate (b4) is from 10:1 to 15:1.

In an especially preferred embodiment, the polyolefin (b2a) of the second component is present in the second component at 40 to 50 wt.-% based on the total weight of the second component,
the at least one aromatic polyisocyanate (b1) is present in the second component at 45 to 55 wt.-% based on the total weight of the second component,
the at least one linear aliphatic polyisocyanate (b3) is present in the second composition at 1.5 to 2.5 wt.-% based on the total weight of the second component, if the at least one linear aliphatic polyisocyanate is present in the second component,
the at least one cyclic aliphatic polyisocyanate (b4) is present in the second composition at 1.5 to 2.5 wt.-% based on the total weight of the first composition, if the at least one cyclic aliphatic polyisocyanate is present in the second component,
the weight ratio of the at least one aromatic polyisocyanate (b1) to the at least one linear aliphatic polyisocyanate (b3) and/or the at least one cyclic aliphatic polyisocyanate (b4) is from 20:1 to 30:1, and
the weight ratio of the at least one aromatic polyisocyanate (b1) to the combination of the at least one linear aliphatic polyisocyanate (b3) and the at least one cyclic aliphatic polyisocyanate (b4) is from 10:1 to 15:1.

In a more preferred embodiment, the present invention is directed to a two- or three-component composition comprising, in a spatially separated arrangement,
(C1) a first component comprising
   (a) a polyolefin having a polymer backbone consisting of (a-i) repeating units derived from an olefinically unsaturated monomer having 4 carbon atoms and, optionally, (a-ii) a hydrocarbon group L having 5-20 carbon atoms in a non-terminal position of said polymer backbone, wherein said polymer backbone has functional groups selected from hydroxyl groups and amine groups at its chain ends; and
(C2) a second component comprising a preparation comprising
   (b1) at least one aromatic polyisocyanate having 2 or more isocyanate groups and/or
   (b2) a reaction product having isocyanate groups obtained by reacting said polyisocyanate having 2 or more isocyanate groups (b1) and (b2a) a polyolefin having a polymer backbone consisting of (b2a-i) repeating units derived from an olefinically unsaturated monomer having 4 carbon atoms and, optionally, (b2a-ii) a hydrocarbon group having 5-20 carbon atoms in a non-terminal position of said polymer backbone, wherein said polymer chain has functional groups selected from hydroxyl groups and amine groups at its chain ends; and optionally
(C3) a third component,
   wherein the two or three-component composition further comprises at least one linear aliphatic polyisocyanate having 2 or more isocyanate groups (b3) and at least one cyclic aliphatic polyisocyanate having 2 or more isocyanate groups (b4) as constituent of the second component (C2) and/or third component (C3) in a content of 10 wt.-% or less of the second component (C2),
   wherein the first component (C1) additionally comprises at least one cyclic aliphatic tertiary amine and at least one tin based catalyst,
   wherein the first component additionally comprises at least one silylether adhesion promoter, wherein the silylether has a functional group, which is reactive towards at least one of alcohol-, amino- or isocyanate groups, and
   wherein the first component further comprises at least one diamine on the basis of polytetrahydrofurane.

In an even more preferred embodiment, the present invention is directed to a two- or three-component composition comprising, in a spatially separated arrangement,
(C1) a first component comprising
   (a) a polyolefin having a polymer backbone consisting of (a-i) repeating units derived from an olefinically unsaturated monomer having 4 carbon atoms and, optionally, (a-ii) a hydrocarbon group L having 5-20 carbon atoms in a non-terminal position of said polymer backbone, wherein said polymer backbone has functional groups selected from hydroxyl groups and amine groups at its chain ends; and
(C2) a second component comprising a preparation comprising
   (b1) at least one aromatic polyisocyanate having 2 or more isocyanate groups and/or
   (b2) a reaction product having isocyanate groups obtained by reacting said polyisocyanate having 2 or more isocyanate groups (b1) and (b2a) a polyolefin having a polymer backbone consisting of (b2a-i) repeating units derived from an olefinically unsaturated monomer having 4 carbon atoms and, optionally, (b2a-ii) a hydrocarbon group having 5-20 carbon atoms in a non-terminal position of said polymer backbone, wherein said polymer chain has functional groups selected from hydroxyl groups and amine groups at its chain ends; and optionally
(C3) a third component,
   wherein the two or three-component composition further comprises at least one linear aliphatic polyisocyanate having 2 or more isocyanate groups (b3) and at least one cyclic aliphatic polyisocyanate having 2 or more isocyanate groups (b4) as constituent of the second component (C2) and/or third component (C3) in a content of 10 wt.-% or less of the second component (C2),
   wherein the first component (C1) additionally comprises at least one cyclic aliphatic tertiary amine and at least one tin based catalyst,
   wherein the first component additionally comprises at least one silylether,
   wherein the silylether has a functional group, which is reactive towards at least one of alcohol-, amino- or isocyanate groups,
   wherein the first component further comprises at least one diamine on the basis of polytetrahydrofurane,
   wherein the at least one aromatic polyisocyanate having 2 or more isocyanate groups (b1) is selected from the group consisting of diphenylmethane 4,4' - diisocyanate, diphenylmethane 2,4' -diisocyanate, diphenylmethane 2,2' - diisocyanate, polymeric MDI and mixtures thereof,
   wherein the at least one linear aliphatic polyisocyanate having 2 or more isocyanate groups (b3) is hexamethylene 1,6-diisocyanate, and
   wherein the at least one cyclic aliphatic polyisocyanate having 2 or more isocyanate groups (b4) is 1-isocyanato-3,3,5-trimethyl-5-isocyanatomethylcyclohexane.

A further aspect of the present invention is the coating preparation obtainable by mixing the first component (C1) and the second component (C2) of the composition as described above, if the at least one linear aliphatic polyisocyanate having 2 or more isocyanate groups (b3) and at least one cyclic aliphatic polyisocyanate having 2 or more isocyanate groups (b4) are comprised in the second component (C2).

A further aspect of the present invention is the coating preparation obtainable by mixing the first component (C1) and the second component (C2) of the composition as described above, if the at least one linear aliphatic polyisocyanate having 2 or more isocyanate groups (b3) and/or at least one cyclic aliphatic polyisocyanate having 2 or more isocyanate groups (b4) are comprised in the third component (C3).

Preferably, the coating preparation in an initial stage after mixing has a viscosity of 4000 to 12000 mPa*s, preferably 5000 to 10500 mPa*s. if the viscosity is in this range application of the composition to a substrate by spraying is conveniently possible.

All aspects, proportions and embodiments described above, also apply to these inventive coating preparations so that reference is made thereto.

A further aspect of the present invention is the cured composition obtainable by curing a coating preparation as described above, preferably after the curing preparation has been applied on a substrate as a coating.

All aspects, proportions and embodiments described above, also apply to the inventive cured composition so that reference is made thereto.

A further aspect of the present invention is the method of preparing a coating layer from the composition as described above comprising the following steps:
(i) mixing the first component (C1) and the second component (C2) of the composition, if the at least one linear aliphatic polyisocyanate having 2 or more isocyanate groups (b3) and at least one cyclic aliphatic polyisocyanate having 2 or more isocyanate groups (b4) are comprised in the second component (C2), or mixing the first component (C1), the second component (C2) and the third component (C3) of the composition, if the at least one linear aliphatic polyisocyanate having 2 or more isocyanate groups (b3) and at least one cyclic aliphatic polyisocyanate having 2 or more isocyanate groups (b4) are comprised in the third component (C3), wherein preferably the first component (C1) and the second component (C2) are mixed before the third component (C3) is added,
(ii) applying the mixture of step (i) to a substrate, and
(iii) curing the applied mixture of step (ii).

Preferably, the substrate in (ii) consists essentially of concrete and/or a metal alloy, wherein the metal alloy is preferably steel.

All aspects, proportions and embodiments described above, also apply to this inventive method so that reference is made thereto.

A further aspect of the present invention is the coated substrate obtainable by curing a coating preparation as described above.

Preferably, the coated substrate is an offshore installation or part thereof.

Preferably, the initial adhesion strength of the coating preparation on the coated substrate is 5 mN/mm² or more.

More preferably, the initial adhesion strength of the coating preparation on the coated substrate is 5 mN/mm² or more, preferably from 5 to 10 mN/mm², if the substrate consists essentially of a metal alloy, wherein the metal alloy is preferably steel.

More preferably, the initial adhesion strength of the coating preparation on the coated substrate is 8 mN/mm² or more, preferably from 8 to 11 mN/mm², if the substrate consists essentially of concrete.

Preferably, the aged adhesion strength of the coating preparation on the coated substrate is 5 mN/mm² or more.

More preferably, the aged adhesion strength of the coating preparation on the coated substrate is 5 mN/mm² or more, preferably from 5 to 10 mN/mm², if the substrate consists essentially of a metal alloy, wherein the metal alloy is preferably steel.

More preferably, the aged adhesion strength of the coating preparation on the coated substrate is 8 mN/mm² or more, preferably from 8 to 11 mN/mm², if the substrate consists essentially of concrete.

The adhesion strength in the context of this invention is determined according to DIN EN ISO 4624 (2023) method B.

Examples for possible parts of offshore installations include structural steel components, pipelines, deck surfaces, tanks and vessels, risers, subsea equipment, fenders and bumpers, cable protection systems, anchors and chains.

All aspects, proportions and embodiments described above, also apply to the inventive coated substrate so that reference is made thereto.

A further aspect of the present invention is the use of the coating preparation described above for partially or fully coating a substrate.

Preferably, the substrate essentially consisting of concrete and/or an iron alloy, wherein the iron alloy is preferably steel. If the substrate is a concrete substrate, it is preferred that the inventive composition is a two component composition, where the linear aliphatic polyisocyanate and the cyclic aliphatic isocyanate are comprised in the second component. If the substrate is a steel substrate, it is preferred that the inventive composition is a three component composition, at least the linear aliphatic polyisocyanate and/or the cyclic aliphatic isocyanate is comprised in the third component and where more preferably the linear aliphatic polyisocyanate and the cyclic aliphatic isocyanate are comprised in the third component. In this case, the respective polyisocyanates are preferably used as respective polymeric polyisocyanates, more preferably with a ratio of polymeric linear aliphatic polyisocyanate to polymeric cyclic aliphatic isocyanate in the range von 1.5:1 to 4:1 and more preferably from 3:1 to 2:1.

All aspects, proportions and embodiments described above, also apply to the inventive use so that reference is made thereto.

In the following, the invention will be further illustrated by means examples, which are however not intended as limiting the scope of protection of the application in any way.

### Examples

### Example 1:

In order to provide a coating formulation with improved shelf live and good adhesion characteristics, different two component compositions were prepared as shown in the following Table 1.

**Table 1**

| | Comparative sample 1 | Comparative sample 2 | Comparative sample 3 | Sample 1 | Sample 2 | Sample 3 | Sample 4 | Sample 5 |
|---|---|---|---|---|---|---|---|---|
| **Component A** | | | | | | | | |
| hydroxy terminated polybutadiene | 55.10 | 55.10 | 55.10 | 59.25 | 59.25 | 59.25 | 58.85 | 60.95 |
| natural oil based aliphatic polyol (6,2 % OH) | 18.00 | 18.00 | | | | | | |
| phenol modified liquid hydrocarbon resin | | | 18.00 | 18.00 | | 9.00 | 9.00 | 9.00 |
| PolyTHF based aromatic diamine | | | | | 18.00 | 9.00 | 9.00 | 9.00 |
| Diethyl toluene diamine | 18.40 | 18.40 | 18.40 | 18.40 | 18.40 | 18.40 | 18.40 | 18.40 |
| Triethylenamine | 2.60 | 2.60 | | | | | | |
| defoamer | 0.20 | 0.20 | 0.20 | 0.20 | 0.20 | 0.20 | 0.20 | 0.20 |
| bismuth(III)-catalyst | 0.20 | | 0.20 | | | | | |
| Zincoctoate 12% | 1.00 | | 1.00 | | | | | |
| Colorant (white) | 1.98 | 1.90 | 1.90 | 1.95 | 1.95 | 1.95 | 1.95 | |
| Colorant (black) | 0.02 | 0.10 | 0.10 | 0.05 | 0.05 | 0.05 | 0.05 | |
| dioctyltin catalyst | | 0.248 | | | | | 0.25 | 0.25 |
| DABCO | 0.50 | 0.30 | 0.30 | | | | 0.30 | 0.30 |
| gylcidyloxypropytrimethoxysilan (adhesion promoter) | 2.00 | 2.00 | 2.00 | 2.00 | 2.00 | 2.00 | 2.00 | |
| | | | | | | | | |

| **Component B** | | | | | | | | |
|---|---|---|---|---|---|---|---|---|
| MDI blend | 52.80 | 52.80 | 52.80 | 50.7 | 50.7 | 50.7 | 50.7 | 50.7 |
| Stabilizer | 0.05 | 0.05 | 0.05 | 0.05 | 0.05 | 0.05 | 0.05 | 0.05 |
| hydroxy terminated polybutadiene | 47.15 | 47.15 | 47.15 | 45.26 | 45.26 | 45.26 | 45.26 | 45.26 |
| HDI based resin | | | | 2.00 | 2.00 | 2.00 | 2.00 | 2.00 |
| trimeric IPDI | | | | 2.00 | 2.00 | 2.00 | 2.00 | 2.00 |

For the evaluation of the performance of the compositions, the respective components were mixed in a ratio of 1:1 and applied to either a cement or steel substrate. The adhesion on cement (after 0.5 L application of the mixture (= start) and after 10 L application of the mixture (= end)), and the respective adhesion on a steel substrate was tested after the coating has fully cured on the respective substrate for 7 days at room temperature. For some of the better inventive samples, respective test samples were exposed for 3000 h to condensation testing (KKT) and salt spraying testing (SST) to determine the durability of the adhesion on the respective substrates.

The adhesion values were determined by attaching a tensile testing element on a test circle of the coating, which has been cut through the coating onto the substrate, by means of an adhesive and by pulling the tensile testing element and test circle from the substrate. The force, which was necessary for pulling away the testing element, relative to the surface area of the test piece in (mN/mm²) was taken as the "adhesion" under the respective conditions.

The "crosslinking", which is indicated below by calculated from the ratio of NCO/(OH + NH₂), where a crosslinking %-age of 100 designates an NCO/(OH + NH₂) ratio of 1:1 and a higher crosslinking %-age designates an excess of NCO over the combined amount of OH and NH₂.

The results of the tests are indicated in the below table 2.

**Table 2**

| | Comparative 1 | Comparative 2 | Comparative 3 | Sample 1 | Sample 2 | Sample 3 | Sample 4 | Sample 5 |
|---|---|---|---|---|---|---|---|---|
| Mixing ratio A/B | 1:1 | 1:1 | 1:1 | 1:1 | 1:1 | 1:1 | 1:1 | 1:1 |

| Crosslinking [%] | 109% | 109% | 160% | 148% | 130% | 138 % | 138 % | 138% |
|---|---|---|---|---|---|---|---|---|
| Adhesion to cement (start) [mN/mm²] | 4.6 | 5.1 | 6.0 | 2.9 | 4.9 | 7.7 | 9.0 | 8.5 |
| Adhesion to cement (end) [mN/mm²] | 6.5 | n.d. | 7.1 | n.d. | n.d. | n.d. | 6.0 | 8.4 |
| Adhesion to steel (start) [mN/mm²] | 4.8 | 6.8 | 7.5 | 1.9 | 5.3 | 6.24 | 9.0 | 7.9 |
| Adhesion to steel (end) [mN/mm²] | 7.3 | n.d. | 6.5 | n.d. | n.d. | n.d. | 7.5 | 8.6 |
| Adhesion after 3000 h KKT (cement) [mN/mm²] | n.d. | n.d. | n.d. | n.d. | n.d. | n.d. | 6.0 | 4.3 |
| Adhesion after 3000 h SST (cement) [mN/mm²] | n.d. | n.d. | n.d. | n.d. | n.d. | n.d. | 9.0 | 8.8 |
| Adhesion after 3000 h KKT (steel) [mN/mm²] | n.d. | n.d. | n.d. | n.d. | n.d. | n.d. | 6.7 | 7.2 |
| Adhesion after 3000 h SST (steel) [mN/mm²] | n.d. | n.d. | n.d. | n.d. | n.d. | n.d. | 6.7 | 5.3 |

| | | | | | | | | |
|---|---|---|---|---|---|---|---|---|
| n.d. = not determined | | | | | | | | |

As is apparent from table 2, the comparative composition 1 exhibited moderate adhesion, where especially at the start of the application, the adhesion was less suitable. In addition, this composition suffers from relatively poor shelf stability as the constituents of the A component therein tend to segregate over time. By changing the catalyst in the composition (comparative sample 2) or one of the polyol constituents therein, the adhesion properties could slightly be improved.

Upon modification of the composition to incorporate smaller amounts of HDI and IPDI isocyanates, the stability of the formulation of component A could significantly be improved and the respective composition was stable against segregation for 6 month. With the initial modification of the composition, on the other hand, the adhesion in sample 2 was not fully satisfactory, so that the composition of the polyol mixture was further modulated in samples 2 and 3. Here, the partial replacement of phenol modified liquid aromatic hydrocarbon resin by an aliphatic diamine provided significantly improved adhesion. Further the incorporation of a catalyst system comprising a tin catalyst and DABCO as a tertiary amine co-catalyst provided significant further improvement of the adhesion.

### Example 2:

The composition of sample 4, which in Examples 1 had provided the best adhesion results and good stability in condensation and salt spraying testing, was used as a reference for the determination of optimum concentrations of the tin and tertiary amine catalyst. The composition, which have been investigated in this respect are given in the following table 3.

**Table 3**

| | Sample 6 | Sample 7 | Sample 8 | Sample 9 | Sample 10 | Sample 11 | Sample 12 | Sample 13 | Sample 14 | Sample 15 | Sample 16 |
|---|---|---|---|---|---|---|---|---|---|---|---|
| **Component A,** sample 4 | 99.45 | 99.45 | 99.45 | 99.45 | 99.45 | 99.45 | 99.45 | 99.45 | 99.45 | 99.45 | 99.45 |
| dioctyltin catalyst | 0.15 | 0.20 | 0.25 | 0.30 | 0.15 | 0.20 | 0.25 | 0.30 | 0.15 | 0.20 | 0.25 |
| DABCO | 0.15 | 0.15 | 0.15 | 0.15 | 0.30 | 0.30 | 0.30 | 0.30 | 0.45 | 0.45 | 0.45 |
| | | | | | | | | | | | |
| **Component B,** sample 4 | 100.00 | 100.00 | 100.00 | 100.00 | 100.00 | 100.00 | 100.00 | 100.00 | 100.00 | 100.00 | 100.00 |
| | | | | | | | | | | | |

| **Properties** | | | | | | | | | | | |
|---|---|---|---|---|---|---|---|---|---|---|---|
| Spraying picture | Good, no nose | Very good, no nose | Good, no nose | Good, no nose | Good, no nose | Good, no nose | Good, no nose | Good, no nose | Less good than sample 10, no nose | Bad, no nose | Bad, no nose |
| Adhesion (steel) [mN/mm²] | 4.2 | ~ 5.8 | 7.1 | 5.7 | 10.7 | 7.6 | 7.7 | ~ 6.1 | 5.9 | 5.4 | ~5.7 |
| Adhesion (cement) [mN/mm²] | 4.9 | 4.5 | 5.1 | 5.1 | 6.9 | 5.2 | 5.2 | 4.8 | 4.9 | 4.8 | ~ 7.1 |

As is apparent from the above table 3, the best adhesion could be obtained by using tin catalyst and tertiary amine co-catalyst in a ratio of 1:2 to 5:6, when the total amount of co-catalyst in the component A was in the range from 0.4 to 0.55.

### Example 3:

The composition of sample 12, which in the above Example 2 had provided favorable adhesion properties was used for an evaluation of the effect of silane adhesion promoters on the adhesion to cement and steel. In this evaluation also the viscosity of the respective compositions was assessed to ensure that the coating can be stably processed by spraying. The results of this testing, as well as a qualitative assessment of the spraying picture obtained in the tests is provided in the following table 4.

**Table 4**

| | Sample 17 | Sample 18 | Sample 19 | Sample 20 | Sample 21 | Sample 22 | Sample 22 |
|---|---|---|---|---|---|---|---|
| **Component A,** sample 12 | 98.00 | 98.00 | 98.00 | 98.00 | 98.00 | 98.00 | 98.00 |
| Gylcidyloxypropytrimethoxysilan | 2.00 | | | | | | |
| Octyltriethoxysilane | | 2.00 | | | | | |
| Octyltrimethoxysilane | | | 2.00 | | | | |
| Isocyanurate based silane | | | | 2.00 | | | |
| N-(Butyl)-3-aminopropyltrimethoxysilane | | | | | 2.00 | | |
| diaminofunctional silane | | | | | | 2.00 | |
| Organofunctional silane oligomer | | | | | | | 2.00 |
| | | | | | | | |
| **Component B,** sample 4 | 100.00 | 100.00 | 100.00 | 100.00 | 100.00 | 100.00 | 100.00 |
| | | | | | | | |

| **Properties** | | | | | | | |
|---|---|---|---|---|---|---|---|
| Spraying picture | Bad, small nose | Average, small nose | Very good, no nose | bad | bad | First good, than getting less good, no nose | Average, no nose |
| Viscosity after 5d @ RT, 20 RPM [mPas] | 17650 | 5250 | 10150 | 12400 | 10600 | 13400 | 10650 |
| Adhesion to steel [mN/mm²] | 5.1 | 8.6 | 5.5 | 2.2 | 2.6 | 4.6 | 3.1 |
| Adhesion to cement [mN/mm²] | 5.4 | 4.5 | 6.1 | 3.1 | 3.5 | 4.6 | 4.2 |
| Adhesion after 3000 h KKT (cement) [mN/mm²] | 7.5 | 5.9 | 6.2 | n.d. | n.d. | n.d. | n.d. |
| Adhesion after 3000 h SST (cement) [mN/mm²] | 7.0 | 8.1 | >7.7 | n.d. | n.d. | n.d. | n.d. |
| Adhesion after 3000 h KKT (steel) [mN/mm²] | 6.6 | 8.0 | 8.1 | n.d. | n.d. | n.d. | n.d. |
| Adhesion after 3000 h SST (steel) [mN/mm²] | 6.5 | 7.1 | 7.8 | n.d. | n.d. | n.d. | n.d. |

As is apparent from the above table, the octyltrimethoxysilane- and octyltriethoxysilane-adhesion promoters provided the best combined properties of good adhesion, low and stable application viscosity and good spraying picture.

## Claims

1. Two- or three-component composition comprising, in a spatially separated arrangement,
(C1) a first component comprising
(a) a polyolefin having a polymer backbone consisting of (a-i) repeating units derived from an olefinically unsaturated monomer having 4 carbon atoms and, optionally, (a-ii) a hydrocarbon group L having 5-20 carbon atoms in a non-terminal position of said polymer backbone, wherein said polymer backbone has functional groups selected from hydroxyl groups and amine groups at its chain ends; and
(C2) a second component comprising a preparation comprising
(b1) at least one aromatic polyisocyanate having 2 or more isocyanate groups and/or
(b2) a reaction product having isocyanate groups obtained by reacting said polyisocyanate having 2 or more isocyanate groups (b1) and (b2a) a polyolefin having a polymer backbone consisting of (b2a-i) repeating units derived from an olefinically unsaturated monomer having 4 carbon atoms and, optionally, (b2a-ii) a hydrocarbon group having 5-20 carbon atoms in a non-terminal position of said polymer backbone, wherein said polymer chain has functional groups selected from hydroxyl groups and amine groups at its chain ends; and optionally
(C3) a third component,
wherein the two or three-component composition further comprises at least one linear aliphatic polyisocyanate having 2 or more isocyanate groups (b3) and/or at least one cyclic aliphatic polyisocyanate having 2 or more isocyanate groups (b4) as constituent of the second component (C2) and/or third component (C3) in a content of 10 wt.-% or less of the second component (C2).

2. Composition according to claim 1, wherein the first component (C1) additionally comprises at least one tertiary amine, preferably at least one cyclic tertiary amine, more preferably at least one cyclic aliphatic tertiary amine, and/or at least one main group metal based catalyst, preferably at least one carbon group metal based catalyst, more preferably at least one tin based catalyst.

3. Composition according to claim 1 or 2, wherein the first, second or third component additionally comprises at least one silane, preferably at least one silylether, more preferably wherein the silane has a functional group which is reactive towards at least one of alcohol-, amino- or isocyanate groups.

4. Composition according to one of claims 1 to 3, wherein the olefinically unsaturated monomer having 4 carbon atoms forming polyolefin (a) and/or polyolefin (b2a) has 1 olefinic double bond or 2 olefinic double bonds, and is preferably selected from the group consisting of butadiene, n-butene, 2-butene, isobutene and mixtures thereof.

5. Composition according to one of claims 1 to 4, wherein the functional groups of the polyolefin (a) and/or polyolefin (b2a) are hydroxyl groups.

6. Composition according to one of claims 1 to 5, wherein the polyolefin (a) and polyolefin (b2a) are identical.

7. Composition according to one of claims 1 to 6, wherein the first component further comprises at least one diamine, preferably in the form of diethyl toluene diamine, on the basis of a C2 to C6 polyalkyleneoxide and more preferably on the basis of polytetrahydrofurane, or a mixture of respective diamines.

8. Composition according to one of claims 1 to 7, wherein at least one aromatic polyisocyanate having 2 or more isocyanate groups (b1) is selected from the group consisting of toluene 2,4-diisocyanate, toluene 2,6-diisocyanate, diphenylmethane 4,4' -diisocyanate, diphenylmethane 2,4'-diisocyanate, diphenylmethane 2,2'-diisocyanate, phenylene 1,3-diisocyanate, phenylene 1,4-diisocyanate, 2,3,5,6-tetramethyl-1,4-diisocyanatobenzene, naphthalene 1,5-diisocyanate, 3,3' -dimethyl-4,4' -diisocyanatodiphenyl, dianisidine diisocyanate and mixtures thereof, preferably diphenylmethane 4,4' -diisocyanate, diphenylmethane 2,4' -diisocyanate, diphenylmethane 2,2' -diisocyanate and mixtures thereof, and/or
wherein the at least one linear aliphatic polyisocyanate having 2 or more isocyanate groups (b3) is selected from the group consisting of tetramethylene 1,4-diisocyanate, 2-methylpentamethylene 1,5-diisocyanate, hexamethylene 1,6-diisocyanate, 2,2,4-trimethylhexamethylene 1,6- diisocyanate, 2,4,4-trimethylhexamethylene 1,6-diisocyanate or mixtures thereof, preferably wherein the least one linear aliphatic polyisocyanate is hexamethylene 1,6-diisocyanate, and/or
wherein the at least one cyclic aliphatic polyisocyanate having 2 or more isocyanate groups (b4) is selected from the group consisting of decamethylene 1,10-diisocyanate, dodecamethylene 1,12-diisocyanate, cyclohexane 1,3-diisocyanate, cyclohexane 1,4-diisocyanate, 1-methyl-2,4-diisocyanatocyclohexane, 1-methyl-2,6-diisocyanatocyclohexane, isomers, 1-isocyanato-3,3,5-trimethyl-5-isocyanatomethylcyclohexane, perhydro(diphenylmethane) 2,4' -diisocyanate, perhydro(diphenylmethane) 4,4' - diisocyanate, 1,4-diisocyanato-2,2,6-trimethylcyclohexane, 1,3-bis(isocyanatomethyl)cyclohexane, 1,4-bis(isocyanatomethyl)cyclohexane or mixtures thereof, preferably wherein the least one cyclic aliphatic polyisocyanate is 1-isocyanato-3,3,5-trimethyl-5-isocyanatomethylcyclohexane.

9. Composition according to one of claims 1 to 8, wherein the first, second or third component additionally comprises at least one colouring agent.

10. Composition according to one of claims 1 to 9, wherein the weight ratio of the first component (C1) to the second component (C2) is from 4:1 to 1:4, preferably from 2:1 to 1:2, more preferably from 3:2 to 2:3, even more preferably from 55:45 to 45:55, if the at least one linear aliphatic polyisocyanate having 2 or more isocyanate groups (b3) and the at least one cyclic aliphatic polyisocyanate having 2 or more isocyanate groups (b4) are comprised in the second component (C2), or
wherein the weight ratio of the first component (C1) to the combination of the second component (C2) and the third component (C3) is from 4:1 to 1:4, preferably from 2:1 to 1:2, more preferably from 3:2 to 2:3, even more preferably from 55:45 to 45:55, if the at least one linear aliphatic polyisocyanate having 2 or more isocyanate groups (b3) and at least one cyclic aliphatic polyisocyanate having 2 or more isocyanate groups (b4) are comprised in the third component (C3).

11. Coating preparation obtainable by mixing the first component (C1) and the second component (C2) of the composition according to one of the claims 1 to 9, if the at least one linear aliphatic polyisocyanate having 2 or more isocyanate groups (b3) and at least one cyclic aliphatic polyisocyanate having 2 or more isocyanate groups (b4) are comprised in the second component (C2).

12. Coating preparation obtainable by mixing the first component (C1), the second component (C2) and the third component (C3) of the composition, preferably by mixing the first component (C1) and the second component (C2) before adding the third component (C3), according to one of the claims 1 to 9, if the at least one linear aliphatic polyisocyanate having 2 or more isocyanate groups (b3) and at least one cyclic aliphatic polyisocyanate having 2 or more isocyanate groups (b4) are comprised in the third component (C2).

13. Cured composition obtainable by curing a coating preparation according to claim 11 or 12, wherein the cured composition is preferably present on a substrate selected form a concrete or steel substrate.

14. Method of preparing a coating layer from the composition according to any one of claims 1 to 10 comprising the following steps:
(i) mixing the first component (C1) and the second component (C2) of the composition, if the at least one linear aliphatic polyisocyanate having 2 or more isocyanate groups (b3) and at least one cyclic aliphatic polyisocyanate having 2 or more isocyanate groups (b4) are comprised in the second component (C2), or mixing the first component (C1), the second component (C2) and the third component (C3) of the composition, if the at least one linear aliphatic polyisocyanate having 2 or more isocyanate groups (b3) and at least one cyclic aliphatic polyisocyanate having 2 or more isocyanate groups (b4) are comprised in the third component (C3), wherein preferably the first component (C1) and the second component (C2) are mixed before the third component (C3) is added,
(ii) applying the mixture of step (i) to a substrate, preferably essentially consisting of concrete and/or a metal alloy, preferably steel, and
(iii) curing the applied mixture of step (ii).

15. Coated substrate obtainable by a method according to claim 14, preferably wherein the coated substrate is an offshore installation or part thereof.

16. Use of the coating preparation according to one of claims 11 or 12 for partially or fully coating a substrate, preferably essentially consisting of concrete and/or an iron alloy, preferably steel.
